Europäisches Patentamt

European Patent Office

Office européen des brevets

(19)

(11) Publication number: **0 118 177**
**B1**

(12) **EUROPEAN PATENT SPECIFICATION**

(45) Date of publication of patent specification: **02.12.87**

(51) Int. Cl.⁴: **F 16 B 15/08**

(21) Application number: **84300391.4**

(22) Date of filing: **23.01.84**

(54) **Coiled assembly of connected fasteners.**

(30) Priority: **07.02.83 JP 16446/83**

(43) Date of publication of application:
**12.09.84 Bulletin 84/37**

(45) Publication of the grant of the patent:
**02.12.87 Bulletin 87/49**

(84) Designated Contracting States:
**BE CH DE FR GB IT LI SE**

(56) References cited:
**DE-A-2 440 847**
**US-A-2 867 806**
**US-A-3 338 396**
**US-A-3 478 872**

(73) Proprietor: **STANLEY-BOSTITCH, INC.**
**East Greenwich**
**Rhode Island 02818 (US)**
(73) Proprietor: **MAX CO., LTD.**
**No. 6-6, Nihonbashihakozakicho**
**Chuoh-ku Tokyo 103 (JP)**

(72) Inventor: **Yamada, Toshio, c/o Max Co. Ltd.**
**6-6 Nihonbashi Hakozaki-Cho**
**Chuo-ku, Tokyo 103 (JP)**
Inventor: **Mashimo, Kazuhiko, c/o Max Co. Ltd.**
**6-6 Nihonbashi Hakozaki-Cho**
**Chuo-ku, Tokyo 103 (JP)**

(74) Representative: **Smart, Peter John et al**
**W.H. BECK, GREENER & CO 7 Stone Buildings**
**Lincoln's Inn**
**London WC2A 3SZ (GB)**

Courier Press, Leamington Spa, England.

## Description

This invention relates to a coiled assembly of fasteners, e.g. nails, to be used by means of an automatic nailing machine, and more particularly to a coiled band having a multiplicity of fasteners such as nails spaced uniformly and parallelly and linked serially with a flexible connecting member.

In an automatic nailing machine, a multiplicity of nails loaded in advance on a magazine are successively fed one by one to a discharge unit and fed out to provide an efficient nailing action.

In order that the multiplicity of nails with which the aforementioned magazine is loaded may be successively fed accurately to position within a nose serving as the discharge unit, there has heretofore prevailed the practice of uniformly and parallelly spacing the multiplicity of nails, connecting the spaced nails with a strip of flexible connecting member made of copper wires or plastic line, for example, and spirally coiling the produced band of nails to ensure ease of handling.

When the band or array of connected nails is spirally coiled in conventional fashion, the heads of the nails in inner plies are superposed on those immediately next outer plies or vice versa so that the continuous line drawn through the heads of the nails gradually rises or falls in the direction from the periphery to the core of the coiled assembly. At the other axial end of the coiled assembly, the pointed ends of the nails gradually rise or fall in the direction from the periphery to the core of the coiled assembly.

The height of the coiled assembly of connected nails, namely the dimension in the axial direction, is from the level of the pointed ends of nails in the outermost or innermost ply of the coil to the level of the heads of nails in the innermost or outermost ply.

Either of the conventional assemblies of connected nails suffers from a disadvantage that the overall height of the spiral coil of connected nails is far greater than the length of the individual nails so that the coil of connected nails takes up a fairly large space.

Further, since the heads of the nails in inner plies are disposed either above or below those of the nails in the immediately next outer plies, there ensures a disadvantage that the coil tends to come loose in the axial direction and fails to retain the individual nails in a tightly bundled state.

When the conventional assembly of connected nails is placed in a container such as a storage tray or loaded on a magazine within an automatic nailing machine, for example, the overall load of the connected nails tends to concentrate at the pointed ends of nails in the outermost ply or innermost ply. Thus, either of the conventional assemblies has a disadvantage that such pointed ends of nails tend to injure the bottom surface of the container. For the coil of connected nails to rest on the floor of its container in such a manner that the overall load of the connected nails may be uniformly distributed to the pointed ends of all the nails, the bottom surface of the container must be formed in a complicate shape conforming to the lower contour of the coil of connected nails.

To accommodate the coiled assembly of the connected nails which has large outside dimensions as described above, the magazine which is charged with the connected nails inevitably assumes a large space. Such an addition to the size of the magazine causes an increase in the size of the automatic nailing machine and restricts the freedom with which the automatic nailing machine is designed.

Similar disadvantage arise in the case of other types of fastener to be automatically applied to a workpiece.

US—A—3338396 discloses a coiled fastener assembly in which the heads of successive nails are arranged at random. This is made possible by using a flexible carrier strip which becomes bunched, gathered and folded to accommodate the longitudinal displacement of successive fasteners in the package. No method of producing such coils with a random head arrangement but also a consistent exterior shape and dimension is described.

US—A—3478872 discloses a coiled fastener assembly in which the heads in successive turns are at alternating levels. However, this specification relates to assemblies in which alternate fasteners are arranged in alternate directions and not similarly orientated. The length of the assembly is substantially greater than the length of an individual fastener and the fastener string has to be progressively untwisted in use to present each fastener in the same orientation for driving. The fasteners in the assembly which are oriented in one sense are spaced by those oriented in the opposite sense and so are not so closely packed as when all the fasteners in an assembly are similarly oriented. The same problems and constraints are not therefore applicable to the two types of assembly.

This invention has issued from the efforts directed to overcoming the various disadvantages suffered by the conventional connected fasteners. It aims to decrease the overall height of an assembly of connected fasteners rolled up in a coil for insertion in a container.

Accordingly, the present invention provides a coiled assembly of connected fasteners each fastener having an elongate shank with an enlarged head and an end shaped to facilitate entry into a workpiece, said multiplicity of fasteners being serially connected by flexible connecting means so that successive fasteners are parallel with one another and oriented end-to-end similarly with respect to one another, connected fasteners being rolled into a coil, characterised in that in said coil the heads of fasteners in each turn of the coil lie generally at the same level and the heads of fasteners in successive turns alternate periodically between lying at a higher level and at a lower level than the heads of the fasteners in the preceding turn.

The term "higher" in this context is used to mean displaced in a first direction along the axis of the coil and the term "lower" to mean displaced in the opposite direction along the axis of the coil.

Preferably for each turn in said coil the heads of the fasteners in each adjacent turn lie at a higher level than the heads of the fasteners in said turn or lie at a lower level than the heads of the fasteners in said turn.

Preferably, alternate turns of the coil are at the same level, so that the coil end formed by the heads of the fasteners at the higher level and the coil end formed by the ends of the fasteners at the lower level, are generally flat. The fasteners may be nails. The flexible connecting means may comprise a pair of parallel wires welded across the shanks of the fasteners. The parallel wires are preferably welded across the shanks in slightly oblique relation thereto. The invention includes an automatic fastening machine comprising a magazine containing a coiled assembly of fasteners as described herein and means for automatically ejecting fasteners in turn into a workpiece. The invention further includes a method for applying a fastener to an article comprising detaching a fastener from a coiled assembly of fasteners as described herein and driving the fastener into the article.

The invention will be illustrated by the following description of an illustrative embodiment with reference to the accompanying drawings wherein:—

FIG. 1 is a front elevational view of a portion of an array of connected nails in a stretched or flat condition prior to being wound up so as to illustrate the relationship between individual nails and the connecting elements by which they are connected;

FIG. 2 is a vertical sectional view of a conventional spirally coiled assembly of connected nails;

FIG. 3 is a view similar to FIG. 2 of another conventional spirally coiled assembly;

FIG. 4 is a partially omitted side elevational view of a coiled assembly of connected nails embodying the principles of the present invention;

FIG. 5 is a partially omitted top plan view of the coiled assembly of FIG. 4; and

FIG. 6 is a view similar to FIGS. 2 and 3 of the coiled assembly shown in FIGS. 4 and 5.

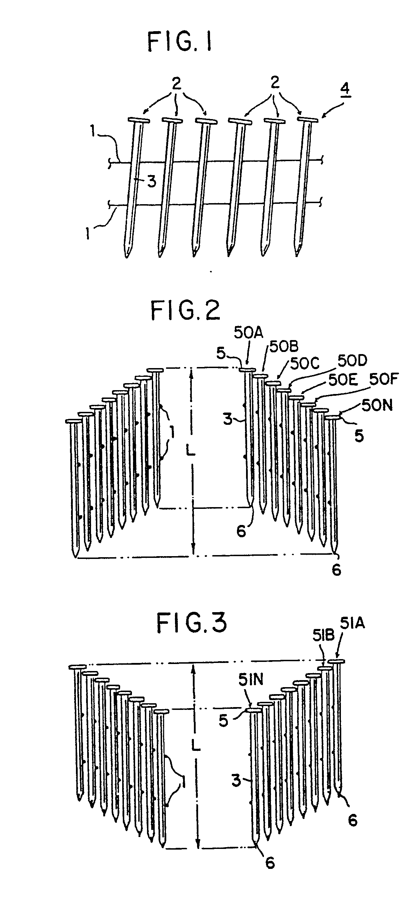

FIG. 1 illustrates typical conventional connected nails. The connected nails, as shown, use two metallic wires as a connecting member 1. This connecting member 1 is fastened to the shanks 3 of a multiplicity of nails 2 as illustrated in FIG. 1 so that the nails 2 will be spaced uniformly and parallelly to give rise to a serial aggregate or array of nails 4.

Concerning the disposition of the axes of the individual nails 2 relative to the aforementioned connecting member 1, one type of array has the individual nails so disposed that the axes perpendicularly intersect the direction in which the connecting member 1 is laid and another type of aggregate has the individual nails disposed so that the axes slightly diagonally intersect the direction of the connecting member 1.

In accordance with conventional practice, the array of nails 4 is rolled in a spiral coil having one ply wrapped around another, with the heads of the individual nails in one ply adjoining those in the immediately next ply as illustrated in FIG. 2.

Since the aforementioned conventional array of connected nails is rolled up in a coil consisting of plies 50A—50N in such a way that the heads 5 of the individual nails in one ply adjoin the shanks of the individual nails in the immediately next inner ply, the heads 5 of the nails in the innermost ply 50A assume the highest position and the heads 5 of the nails in the outermost ply 50N and lowest position.

In the case of these connected nails, therefore, at one axial end of the tubular magazine, the heads 5 of the nails in inner plies are superposed on those immediately next outer plies so that the continuous line drawn through the heads of the nails gradually rises in the direction from the periphery to the core of the tube of the magazine. At the other axial end of the tubular magazine, the pointed ends 6 of the nails gradually rise in the direction from the periphery to the core of the tube.

The height L of the coiled aggregate of connected nails, namely the dimension in the axial direction of the tubular magazine, is from the level of the pointed ends 6 of nails in the outermost ply 50N of the coil to the level of the heads 5 of nails in the innermost ply 50A.

FIG. 3 illustrates another conventional coiled assembly of the array of nails. In this case, an array of nails 4, such as is illustrated in FIG. 1, is rolled up in a spiral coil in such a manner that the heads 5 of the nails in inner plies adjoin the shanks 3 of the nails in the immediately next outer plies.

More specifically, the heads 5 of the nails in the outermost ply 51A assume the highest level and the heads 5 of the nails in the successively inner plies 51B—51N occupy levels gradually lower than the level in the outermost ply. The heads 5 of the nails in the innermost ply 51N assume the lowest level in all the plies.

In the case of these connected nails rolled up in a coil, therefore, at one axial end of the coiled assembly, the heads 5 of the nails in outer plies are superposed on those in immediately next inner plies so that they gradually descend in the direction from the periphery to the core of the assembly. At the other axial end of the coiled assembly, the pointed ends 6 of the nails gradually ascend in the direction from the periphery to the core of the assembly. In the case of this assembly of connected nails, the overall height L of the nail assembly is from the level of the heads 5 of nails in the outermost ply 51A to the level of the pointed ends 6 of nails in the innermost ply 51N.

As indicated above, any of the conventional assemblies of connected nails has suffered from a disadvantage that the overall height L of the spiral coil of connected nails is far greater than the length of the individual nails 2 so that the coil of connected nails takes up a fairly large space.

Further, since the heads 5 of the nails in inner plies are disposed either above or below those of the nails in the immediately next outer plies, there ensues a disadvantage that the coil tends to come loose in the axial direction and fails to retain the individual nails in a tightly bundled state.

When the conventional assembly of connected nails is placed in a container such as a storage tray or loaded on a magazine within an automatic nailing machine, for example, the overall load of the connected nails tends to concentrate at the pointed ends 6 of nails in the outermost ply 50N in the case of the assembly of FIG. 2 or at the pointed ends 6 of nails in the innermost ply 50N in the case of the assembly of FIG. 3. Thus, either of the assemblies under discussion here has a disadvantage that such pointed ends 6 of nails tend to injure the bottom surface of the container. For the coil of connected nails to rest on the floor of its container in such a manner that the overall load of the connected nails may be uniformly distributed to the pointed ends 6 of all the nails, the bottom surface of the container must be formed in a complicate shape conforming to the lower contour of the coil of connected nails.

To accommodate the coiled assembly of connected nails which has large outside dimensions as described above, the magazine which is charged with the connected nails inevitably assumes a large space. Such an addition to the size of the magazine causes an increase in the size of the automatic nailing machine and restricts the freedom with which the automatic nailing machine is designed.

Like the conventional connected nails described above, the connected nails according to the present invention use two metallic wires 1 as a flexible strip of connecting member as illustrated in FIG. 1. A multiplicity of nails 2 are spaced uniformly and mutually parallelly so that the wires 1 may be fused on one side of the shanks 3 of the individual nails 2. Consequently, the multiplicity of nails 2 is connected in a serially arrayed state to constitute one wholly integrated assembly of nails 4. When the assembly of connected nails 4 is placed in an automatic nailing machine (not shown) and put to use, the individual nails are supported so as to be sequentially fed one by one into a nose serving as the discharge unit and the foremost nail within the nose is stably supported in position by the second and following nails through the medium of the aforementioned metallic wires 1. In the present embodiment, the individual nails are so disposed that the axes of these nails slightly obliquely intersect the direction in which the metallic wires 1 are stretched.

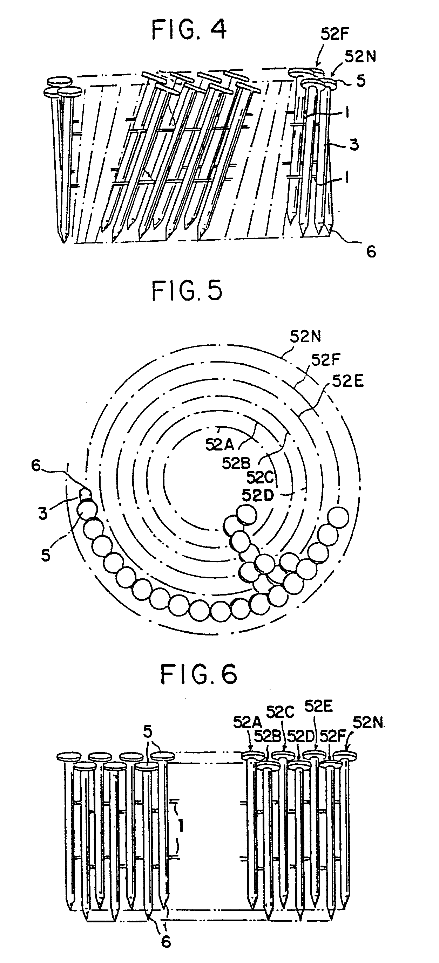

In accordance with the principles of the present invention, the aforementioned array of nails 4, for example, is first rolled tubularly to form the innermost ply 52A of a coil as shown in FIGS. 4—6. In this case, a proper cylindrical member (not shown) is used as the jig on which the array may be wrapped. After the array has been rolled up in a coil on this cylindrical member, this member may be pulled out of the coil. In this manner, the coil can be easily obtained.

Then, around the innermost ply 52A, the second ply 52B, the third ply 52C, and so on are successively wound spirally until the outermost ply 52N. These plies from the innermost ply 52A through the outermost ply 52N are formed so that the heads 5 of the nails in the odd-numbered (first, third, and so on) plies 52A, 52C, 52E, ... assume a level higher than the heads of the nails in the even-numbered (second, fourth, sixth, etc.) plies 52B, 52D, 52F, .... Thus, the heads 5 of the nails in the even-numbered plies 52B, 52D, 52F, ... adjoin the shanks 3 of the nails in the odd-numbered plies 52A, 52C, 52E, .... The heads 5 of the nails in the successive plies on the coil from the inner ply 52A through the outermost ply 52N form alternately rising and falling levels. To be more specific, in the state in which the assembly of connected nails is rolled up in a coil in the present embodiment, the heads 5 of the nails in the odd-numbered plies 52A, 52C, 52E, ... assume a substantially equal level and the heads 5 of the nails in the even-numbered plies 52B, 52D, 52F, ... similarly assume a substantially equal level. Further, the nails in the odd-numbered plies 52A, 52C, 52E, ... are staggered from those in the even-numbered plies 52B, 52D, 52F, ... by a size roughly equalling the height of one head 5 of nail (this size is slightly larger than the thickness of the head of nail in the present embodiment because the individual nails are disposed slightly aslant relative to the direction of the connecting member and the heads of the nails are likewise disposed aslant). The nails in the successive plies of the coil, therefore, are alternately staggered in the vertical direction and their alternating axial positions adjoin by the heads of the nails.

As described above, in the coil of connected nails of the present invention, the nails in the successive plies of the coil have their heads alternately staggered in the axial direction of the coil between radially adjacent plies, the overall size of the coil can be reduced to a small outside shape.

Further, because the heads of the nails are alternately staggered in the vertical direction between adjacent plies as described above, otherwise possible loosening of the individual nails from the whole coil can be completely prevented so that the coil may be retained intact. As regards the shape of the axial end faces of the coil of connected nails, the heads and the pointed ends of the nails are disposed in substantially flat planes. When this coil is set in position inside a container or in a magazine, it rests stably on the floor of the container or magazine. Thus, the connected nails can be stored or set in position safely in the container or magazine without the possibility of the overall load of the connected nails being concentrated only to part of the pointed ends of nails.

Owing further to the reduction in overall size of the coil, the magazine for accommodating the connected nails in the automatic nailing machine can be formed in a proportionally small size. By the same token, the size of the automatic machine itself can be reduced.

It thus will be seen that the objects of this invention have been fully and effectively accomplished. It will be realized, however, that the foregoing preferred specific embodiment has been shown and described for the purpose of illustrating the functional and structural principles of this invention.

## Claims

1. A coiled assembly of connected fasteners (2) each fastener (2) having an elongate shank (8) with an enlarged head (5) and an end (6) shaped to facilitate entry into a workpiece, said multiplicity of fasteners (2) being serially connected by flexible connecting means (1) so that successive fasteners (2) are parallel with one another and oriented end-to-end similarly with respect to one another, connected fasteners (2) being rolled into a coil, characterised in that in said coil the heads (5) of fasteners (2) in each turn of the coil lie generally at the same level and the heads (5) of fasteners (2) in successive turns alternate periodically between lying at a high lever and at a lower level than the heads (5) of the fasteners (2) in the preceding turn.

2. A coiled assembly as claimed in Claim 1 characterised in that for each turn in said coil the heads (5) of the fasteners (2) in each adjacent turn lie at a higher level than the heads (5) of the fasteners (2) in said turn or lie at a lower level than the heads (5) of the fasteners (2) in said turn.

3. A coiled assembly as claimed in Claim 2 characterised in that alternate turns of the coil are at the same level, so that the coil end formed by the heads (5) of the fasteners at the higher level and the coil end formed by the ends (6) of the fasteners at the lower level, are generally flat.

4. A coiled assembly as claimed in any preceding claim wherein said fasteners (2) are nails.

5. A coiled assembly as claimed in any preceding claim wherein said flexible connecting means (1) comprises a pair of parallel wires welded across the shanks (8) of the fasteners (2).

6. A coiled assembly as claimed in Claim 5, wherein said parallel wires are welded across the shanks in slightly oblique relation thereto.

7. An automatic fastening machine comprising a magazine containing a coiled assembly of fasteners as claimed in any preceding claim and means for automatically ejecting fasteners in turn into a workpiece.

8. A method for applying a fastener to an article comprising detaching a fastener from a coiled assembly of fasteners as claimed in any preceding claim and driving the fastener into the article.

## Patentansprüche

1. Spiralanordnung für miteinander verbundene Befestigungselemente (2), von denen jedes einen länglichen Schaft (8) mit einem vergrößerten Kopf (5) und einem Ende (6) aufweist, die so geformt sind, daß das Befestigungselement (2) in ein Werkstück eintreten kann, wobei die Anzahl der Befestigungselemente (2) durch flexible Verbindungsmittel (1) seriell derart verbunden ist, daß aufeinanderfolgende Befestigungselemente (2) parallel zueinander und mit den Enden aneinanderstoßend ausgerichtet sind, wobei die verbundenen Befestigungselemente (2) zu einer Spirale aufgerollt sind, dadurch gekennzeichnet, daß in der Spirale die Köpfe (5) der Befestigungselemente bei jeder Windung der Spirale im allgemeinen auf der gleichen Höhe liegen und daß die Köpfe (5) von Befestigungselementen (2) in aufeinanderfolgenden Windungen abwechselnd auf einem höheren Niveau und einem tieferen Niveau als die Köpfe (5) der Befestigungselemente (2) der vorhergehenden Windung liegen.

2. Spiralanordnung nach Anspruch 1, dadurch gekennzeichnet, daß für jede Windung der Spirale die Köpfe (5) der Befestigungselemente (2) bei jeder benachbarten Windung auf einem höheren Niveau als die Köpfe (5) der Befestigungselemente (2) in dieser Windung liegen oder daß sie auf einem tieferen Niveau als die Köpfe (5) der Befestigungselemente (2) in dieser Windung liegen.

3. Spiralanordnung nach Anspruch 2, dadurch gekennzeichnet, daß abwechselnde Windungen der Spirale auf dem gleichen Niveau liegen, so daß das von den Köpfen (5) der Befestigungselemente gebildete Spiralenende auf einem höheren Niveau und das von den Enden (6) der Befestigungselemente gebildete Spiralenende im allgemeinen flach sind.

4. Spiralanordnung nach einem der vorhergehenden Ansprüche, dadurch gekennzeichnet, daß die Befestigungselemente (2) Nägel sind.

5. Spiralanordnung nach einem der vorhergehenden Ansprüche, dadurch gekennzeichnet, daß das flexible Verbindungsmittel (1) ein Paar von parallelen Drähten aufweist, die über die Schäfte (8) der Befestigungselemente (2) geschweißt sind.

6. Spiralanordnung nach Anspruch 5, dadurch gekennzeichnet, daß die parallelen Drähte unter leicht schrägem Winkel über die Schäfte geschweißt sind.

7. Automatische Befestigungsvorrichtung mit einem Magazin, welches eine Spiralanordnung von Befestigungsmitteln gemäß einem der vorhergehenden Ansprüche aufweist und die Mittel zum automatischen Ausstoßen der Befestigungselemente in ein Werkstück besitzt.

8. Verfahren zum Anbringen eines Befestigungselementes an einem Gegenstand, dadurch gekennzeichnet, daß ein Befestigungselement von einer Spiralanordnung von Befestigungselementen nach einem der vorhergehenden Ansprüche abgelöst und in den Gegenstand getrieben wird.

**Revendications**

1. Assemblage enroulé d'organes de fixation reliés (2), chaque organe de fixation (2) comportant une tige allongée (8) avec une tête élargie (5) et une extrémité (6) effilée pour faciliter l'introduction dans une pièce, ledit grand nombre d'organes de fixation (2) étant reliés en série par des moyens flexibles (1) de liaison afin que les organes de fixation successifs (2) soient parallèles entre eux et dans une orientation similaire, d'un bout à l'autre, les uns par rapport aux autres, des organes de fixation reliés (2) étant enroulés en une bobine, caractérisé en ce que dans ladite bobine, les têtes (5) des organes de fixation (2), dans chaque spire de la bobine, s'étendent globalement au même niveau et les têtes (5) des organes de fixation (2) dans des spires successives s'étendent en alternant périodiquement à un niveau plus élevé et à un niveau moins élevé que celui des têtes (5) des organes de fixation (2) de la spire précédente.

2. Assemblage bobine selon la revendication 1, caractérisé en ce que, pour chaque spire dans ladite bobine, les têtes (5) des organes de fixation (2) de chaque spire adjacente s'étendent à un niveau plus élevé que celui des têtes (5) des organes de fixation (2) de ladite spire ou s'étendent à un niveau moins élevé que celui des têtes (5) des organes de fixation (2) de ladite spire.

3. Assemblage bobiné selon la revendication 2, caractérisé en ce que des spires alternées de la bobine sont au même niveau, afin que le bout de bobine formé par les têtes (5) des organes de fixation (2) au niveau plus élevé et que le bout de bobine formé par les extrémités (6) des organes de fixation au niveau moins élevé soient globalement plats.

4. Assemblage bobiné selon l'une quelconque des revendications précédentes, dans lequel lesdits organes de fixation (2) sont des clous.

5. Assemblage bobiné selon l'une quelconque des revendications précédentes, dans lequel lesdits moyens flexibles (1) de liaison comprennent deux fils métalliques parallèles, soudés transversalement sur les tiges (8) des organes de fixation (2).

6. Assemblage bobiné selon la revendication 5, dans lequel lesdits fils métalliques parallèles sont soudés transversalement sur les tiges dans une disposition légèrement oblique par rapport à elles.

7. Machine de fixation automatique comprenant un magasin contenant un assemblage bobiné d'organes de fixation selon l'une quelconque des revendications précédentes et des moyens pour éjecter automatiquement tour à tour les organes de fixation dans une pièce.

8. Procédé pour poser un organe de fixation sur un article, consistant à détacher un organe de fixation d'un assemblage bobiné d'organes de fixation selon l'une quelconque des revendications précédentes et à enfoncer l'organe de fixation dans l'article.

0 118 177

FIG. 1

FIG.2

FIG.3

1

## FIG. 4

## FIG. 5

## FIG. 6